# EUROPÄISCHE PATENTANMELDUNG

(11) **EP 1 038 758 A2**
(43) Veröffentlichungstag der Anmeldung: **27.09.2000**
(21) Anmeldenummer: 00106002.9
(22) Anmeldetag: 27.03.2000
(51) Int. Cl.: B62D 11/18

(54) **Fahrzeug, bei dem die Räder mit unterschiedlichen Geschwindigkeiten angetrieben werden**

(30) Priorität: 26.03.1999 US 280113
(71) Anmelder: DEERE & COMPANY, Moline, Illinois 61265-8098 (US)
(72) Erfinder: Teal, Richard Donald, Horicon, WI 53032 (US); Hayes, Eugene Gary, Beaver Dam, WI 53916 (US); Marchese, David Lewis, Pewaukee, WI 53072 (US); Goebert, Barry Joseph, Beaver Dam,WI 53916 (US)
(74) Vertreter: Magin, Ludwig Bernhard

(57) **Zusammenfassung**

Fahrzeuge zur Rasen-, Garten- und Grundstückspflege sollen auf engstem Raum zu manövrieren sein. Hierzu erfolgt die Lenkung nicht über ein Einschlagen von lenkbaren Rädern, sondern durch ein Bewegen der Antriebsräder mit unterschiedlichen Geschwindigkeiten wozu an den Antriebsrädern jeweils ein hydrostatischer Antrieb oder auch ein Differential vorgesehen ist.

Es wird ein Fahrzeug (10) vorgeschlagen, das ein Getriebe mit einer Antriebseinheit (42) und einer Lenkeinheit (44) aufweist, die jeweils sowohl mit den rechten als auch den linken Antriebsrädern (16) wirksam in Verbindung stehen, wobei das Fahrzeug (10) durch ein Antreiben der Antriebsräder (16) mit unterschiedlichen Geschwindigkeiten gelenkt wird.

Fahrzeuge werden in der Rasen-, Garten- und Grundstückspflege eingesetzt.

## Beschreibung

Die Erfindung betrifft ein Fahrzeug mit einem Antrieb und zumindest einem rechten und einem linken auf dem Boden abrollenden Antriebsrad.

Zusammen mit der vorliegenden Anmeldung wurden vier weitere Patentanmeldungen eingereicht, deren Offenbarung durch diese Bezugnahme vollständig eingeschlossen werden soll. Hierbei handelt es sich um die folgenden europäischen Patentanmeldungen:
- Einrichtung zum Lenken eines Fahrzeugs und Fahrzeug,
   Aktenzeichen der Prioritätsanmeldung: US 09/277,418
- Getriebe und Fahrzeug,
   Aktenzeichen der Prioritätsanmeldung: US 09/277,344
- Einrichtung zum Lenken eines Fahrzeugs und Fahrzeug,
   Aktenzeichen der Prioritätsanmeldungen: US 09/277,346 und US 09/412,924
- Fahrzeug,
   Aktenzeichen der Prioritätsanmeldung: US 09/277,351

Es ist bekannt, kleine Fahrzeug wie Fahrzeuge zur Rasen-, Garten- und Grundstückspflege mit hydrostatischen Antrieben für jedes ihrer Antriebsräder auszustatten, so daß diese individuell angetrieben werden können. Ein solches Fahrzeug wird beispielsweise in dem Prospekt von Excel Industries mit dem Titel 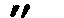 U-T-R The Ultimate Turning Radius" (USA, 1992) gezeigt.

Der Artikel 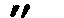 Tanks and dozers turn on a dime with new all-gear steering", aus 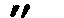 Popular Science" (USA, 1985, Seiten 60 - 62) zeigt ein Lenk- und Antriebssystem für einen Panzer bzw. ein Kettenfahrzeug, bei dem sowohl für den Antrieb von Kettenantriebsrädern, wie auch deren Lenkung jeweils ein Antrieb vorgesehen ist, deren Ausgabe über zwei Differentiale, deren Ausgangswellen über kämmende Zahnräder in Verbindung stehen, an die Kettenantriebsräder weitergegeben wird, so daß deren durch den Antrieb vorgegebene Geschwindigkeit durch die Ausgabe der Lenkung überlagert wird.

Die US-A-4,718,508 zeigt ein Antriebs- und Lenksystem für ein Fahrzeug mit zumindest zwei angetriebene Gleisketten oder Rädern, wobei das Fahrzeug dadurch gelenkt wird, daß eine rechte und eine linke Antriebswelle mittels eines Planetengetriebes in Abhängigkeit von der Stellung eines Lenkrades mit unterschiedlichen Geschwindigkeiten angetrieben werden.

Die WO 00/01569 zeigt einen Rasentraktor, der ein Antriebs- und Lenkgetriebe aufweist, der dadurch gelenkt wird, daß seine angetriebenen Räder mit unterschiedlichen Geschwindigkeiten rotieren. Hierzu weist der Rasentraktor zwei hydrostatische Antriebe auf, wobei einer zum Antrieb der Räder dient und durch den zweiten eine Lenkgeschwindigkeit aufgebracht wird, die zum Ausführen einer Lenkung die durch den ersten Antrieb aufgebrachte Antriebgeschwindigkeit derart überlagert, daß eine Geschwindigkeitsdifferenz der Räder hervorgerufen wird. Bei dieser Anmeldung handelt es sich um ein nachveröffentlichtes Dokument, bei dem noch nicht zu ersehen ist, ob und für welche Länder es als Stand der Technik nach Artikel 54 (3) EPÜ heranzuziehen ist. Es bleibt jedoch auf jeden Fall bei der Beurteilung der erfinderischen Tätigkeit außer Betracht.

Das der Erfindung zugrunde liegende Problem wird in der aufwendigen Ausführung und unkomfortablen Handhabbarkeit bekannter Fahrzeuge gesehen.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise wird ein Fahrzeug vorgesehen, das nur eine Antriebseinheit für alle angetriebenen Räder aufweist und bei dem dennoch jedes Antriebsrad individuell gesteuert werden kann, um eine Lenkung durch eine Geschwindigkeitsdifferenz der Antriebsräder zu bewirken, ohne daß das Fahrzeug hierzu einen Gleiskettenantrieb oder auch einen Vierradantrieb aufweisen muß. Dadurch kann eine angepaßte und dadurch kostensparende Auswahl der Antriebseinheit und der Lenkeinheit erfolgen, wobei die Lenkeinheit geringer dimensioniert werden kann als die Antriebseinheit, da das zum Antrieb erforderliche Drehmoment durch die Antriebseinheit übertragen wird. Durch die Ausstattung eines Fahrzeugs, das durch ein Antreiben seiner Räder mit unterschiedlichen Geschwindigkeiten gelenkt wird, mit einem Lenkrad und einem Pedal zur Betätigung der Antriebseinheit, wird eine einfache Handhabung zur Verfügung gestellt. Die Bedienung wird hierdurch auch für ungeübte Bedienungspersonen vereinfacht, die ansonsten eine längere Zeit benötigen würden, um sich an die ansonsten üblichen Lenkeinrichtungen solcher Fahrzeuge zu gewöhnen.

Ein solches Fahrzeug kann in einfacher Weise durch ein Lenkmittel, insbesondere in der Art eines Lenkrades, gelenkt werden, das mittels einer Lenkspindel auf der vorzugsweise an ihrem dem Lenkrad gegenüberliegenden Ende ein Ritzel drehfest angebracht ist, eine Lenkbewegung an ein Sektorzahnrad weitergibt. Ein solches Sektorzahnrad ist an dem Fahrzeug und vorzugsweise an einem Rahmen des Fahrzeugs schwenkbar angeordnet, so daß es die durch das Lenkrad eingebrachte Lenkbewegung weitergeben bzw. transformieren kann.

Das Sektorzahnrad kann mit der Antriebseinheit und/oder mit der Lenkeinheit über zumindest eine Übertragungseinrichtung in Verbindung stehen. Diese Übertragungseinrichtung kann durch eine elektrische Einrichtung gebildet werden, die die beispielsweise durch Sensoren aufgenommene Stellung des Sektorzahnrades an die Lenkeinheit bzw. die Antriebseinheit weitergibt, vorzugsweise wird diese Übertragungseinrichtung in kostengünstiger und robuster Weise mechanisch, beispielsweise als ein Übertragungsgestänge, ausgebildet sein.

Eine stufenlose Verstellung der Lenkung bzw. eine stufenlose Variation der Lenk- bzw. der Antriebsgeschwindigkeit wird ermöglicht, wenn die Antriebseinheit und/oder die Lenkeinheit einen hydrostatischen Antrieb aufweist. Das Lenkmittel und/oder die Betätigungseinrichtung kann dabei direkt oder indirekt beispielsweise über eine Übertragungseinrichtung auf eine oder mehrere Pumpen dieses Antriebs wirken. Hierzu kann die Übertragungseinrichtung die Stellung der Taumelscheibe der Pumpen verändern, so daß die Förderleistung bzw. bei doppelt wirkenden Pumpen ebenfalls die Förderrichtung bestimmt werden kann.

Die Lenkeinheit bzw. die Antriebseinheit können direkt auf eine der Antriebswellen einwirken. Vorzugsweise ist aber ein Getriebe bzw. mehrere Getriebe/Getriebeabschnitte zwischengeschaltet, um eine Umlenkung und/oder eine Über-/Untersetzung der durch die Lenkeinheit bzw. die Antriebseinheit abgegebenen Momente zu ermöglichen. Bei einem solchen Getriebe kann es sich beispielsweise um ein Riemen-, Ketten- oder ein Zahnradgetriebe handeln.

Die Antriebs- bzw. die Lenkeinheiten bzw. die zugeordneten Getriebe können Differentiale aufweisen, die es ermöglichen, daß Ausgangswellen der Antriebs- bzw. der Lenkeinheit mit unterschiedlichen Geschwindigkeiten rotieren. Es ist aber auch denkbar, daß hierzu Planetengetriebe vorgesehen sind.

Die Betätigungsmittel für die Antriebseinheit können ein Pedal aufweisen, das auf einer Welle schwenkbar gelagert ist und das in Abhängigkeit von der gewünschten Fahrtrichtung des Fahrzeugs durch eine Bedienungsperson nach vorwärts oder nach rückwärts verschwenkt wird. Es können aber auch zwei getrennte Pedale vorgesehen sein, die um getrennte Wellen verschwenkbar sind, so daß eine Bedienungsperson die gewünschte Fahrtrichtung aktiv, durch einen Wechsel des Pedals auswählen muß, wodurch einem ungewollten Fahrtrichtungswechsel vorgebeugt wird. Es kann hierbei vorgesehen sein, daß die Pedale in die gleiche oder in entgegengesetzte Richtungen verschwenkbar vorgesehen sind.

Bei einem erfindungsgemäßen Fahrzeug kann es sich beispielsweise um eine Baumaschine oder um ein landwirtschaftliches Fahrzeug, wie einen Schlepper oder eine selbstfahrende Erntemaschine handeln. Vorzugsweise ist das Fahrzeug aber zur Verwendung in der Rasen-, Garten- bzw. Grundstückspflege ausgebildet, da hier kompakte, günstige und robuste Fahrzeuge gewünscht werden, die eine möglichst gute Manövrierbarkeit gewährleisten.

In der Zeichnung ist ein nachfolgend näher beschriebenes Ausführungsbeispiel der Erfindung dargestellt. Es zeigt:
- Fig. 1: eine schematische Seitenansicht eines Fahrzeugs zur Rasen-, Garten- bzw. Grundstückspflege, das mit einem Antrieb- und Lenkgetriebe mit zwei Differentialen, einem Lenkrad und Pedalen ausgestattet ist,
- Fig. 2: eine Ansicht des Antriebs- und Lenkgetriebes und der Lenkungs- und Pedalzusammenbauten,
- Fig. 3: eine schematische Darstellung ähnlich der in Figur 2 gezeigten, aber von unten betrachtet,
- Fig. 4: eine vergrößerte, perspektivische Darstellung des in Figur 3 gezeigten Pedalzusammenbaus,
- Fig. 5: eine vergrößerte Ansicht des Pedals und der in Figur 4 gezeigten Gestänge und
- Fig. 6: eine schematische Darstellung des Antrieb- und Lenkgetriebes.

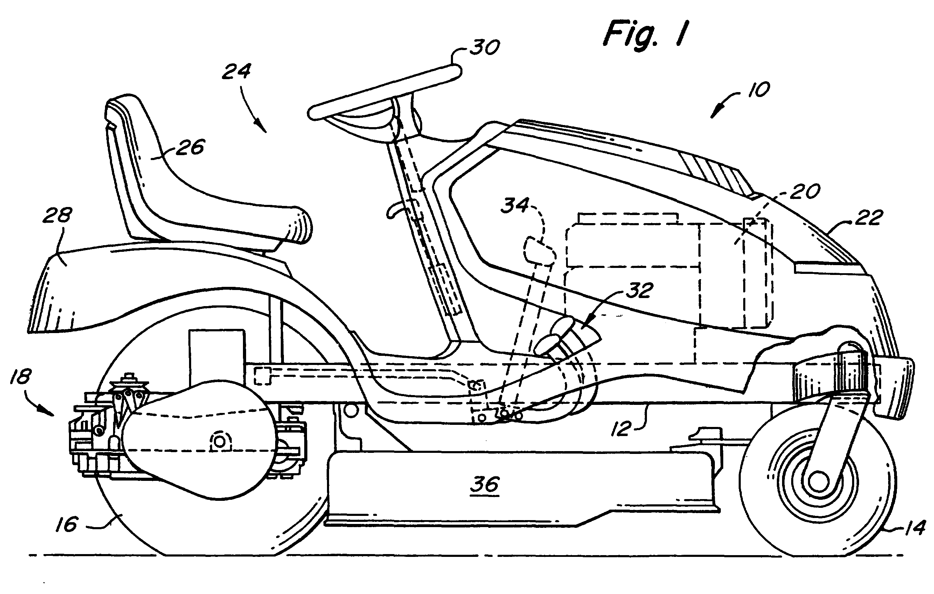

In Figur 1 wird eine schematische Seitenansicht eines Fahrzeugs 10 zur Rasen- und Gartenpflege gezeigt, an dem die vorliegende Erfindung verwendet wird. Das Fahrzeug 10 weist einen Rahmen 12 auf, an dem vordere Freilaufräder 14 und rückwärtige, angetriebene Räder 16 angebracht sind, wobei ein Fahr- und Steuergetriebe bzw. ein Getriebe 18 in dessen rückwärtigem Bereich vorgesehen ist. In der besonderen Ausführungsform, die in Fig. 1 dargestellt wird, ist das Getriebe ein Antriebs- und Lenkgetriebe mit zwei Differentialen. Darüber hinaus ist an einem vorderen Ende des Rahmens 12 ein Antrieb 20, wie auch eine nach unten und vorne abfallende Haubenanordnung 22, die den Antrieb 20 umschließt, angeordnet. An dem rückwärtigen Bereich des Rahmens 12 wird eine Bedienerplattform 24 mit einem Sitz 26 durch die rückwärtige Kotschützerabdeckung 28 getragen, ein Lenkrad 30, Pedale 32 und eine Parksperre 34. Ein Mähwerk 36 ist unterhalb des Rahmens 12 und zwischen den vorderen und rückwärtigen Rädern 14 und 16 angeordnet.

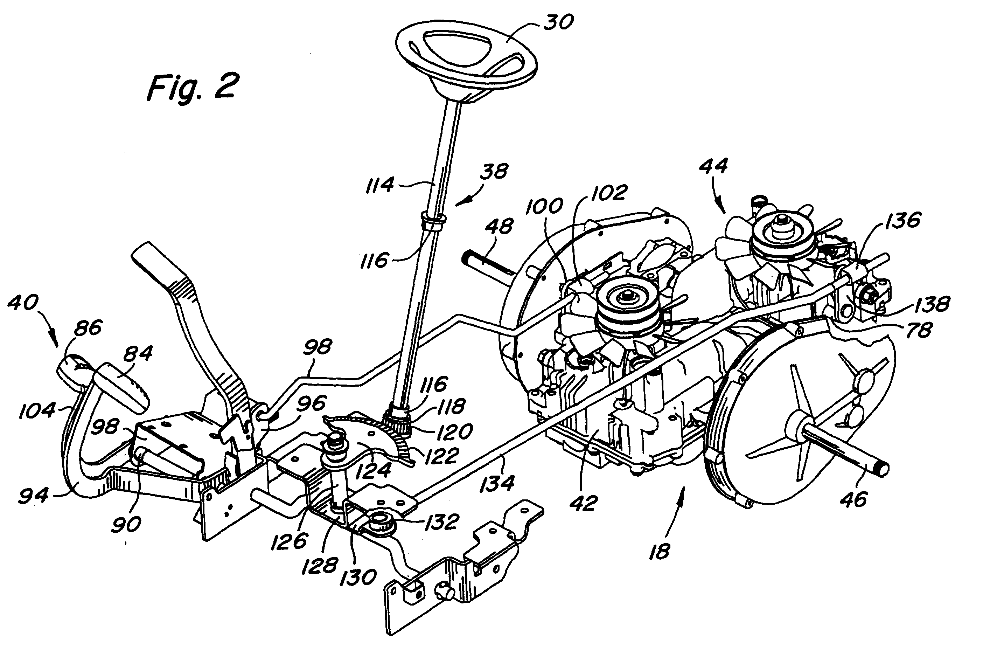

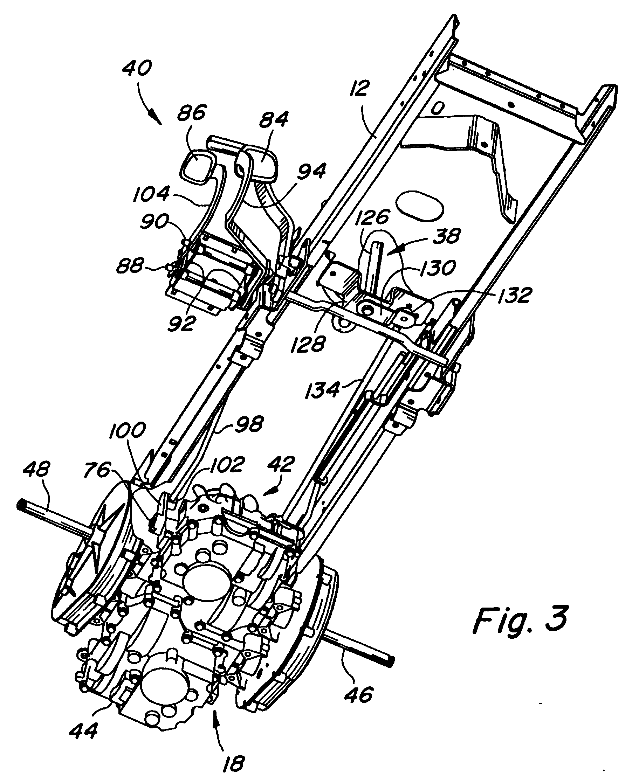

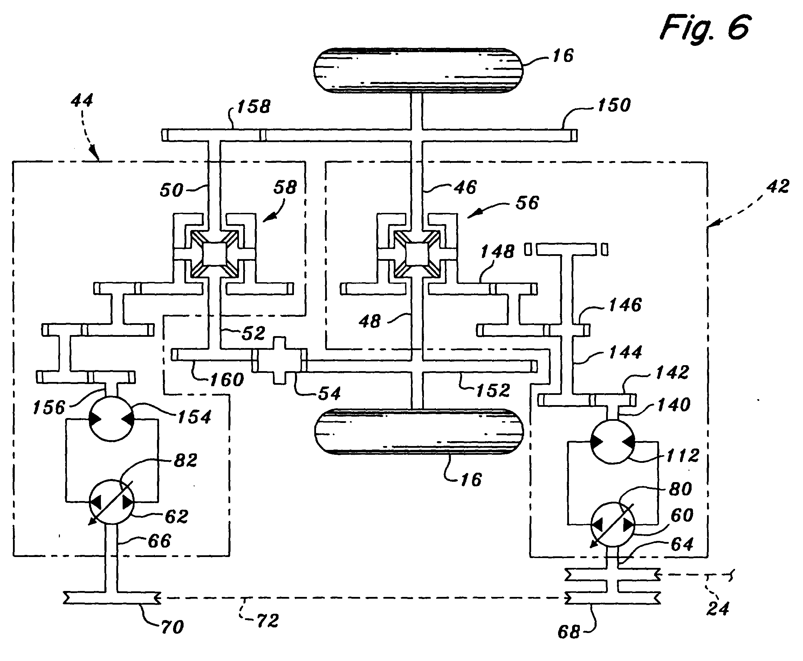

Es werden nun die Figuren 2 und 3 betrachtet, in denen schematische und perspektivische Ansichten des Getriebes 18, und einer Lenkung 38 und einer Pedalanordnung 40 für das Fahrzeug 10 aus Fig. 1 gezeigt werden. Das Getriebe 18 ist ein Antrieb- und Lenkgetriebe mit zwei Differentialen, das eine vordere Antriebseinheit 42 zum Antrieb der Räder 16, wie auch eine rückwärtigen Lenkeinheit 44, die mit der vorderen Antriebseinheit 42 verbunden ist, aufweist. Wie es ebenso schematisch in den Figuren 2, 3 und 6 dargestellt ist, weisen die Antriebs- und die Lenkeinheit 42 und 44 jeweils ein Paar von sich seitlich erstreckenden linken und rechten Antriebswellen 46 und 48 auf, wobei die Antriebsräder 16 durch die Antriebswellen 46 und 48 getragen werden. Die linken und rechten Lenkwellen 50 und 52 des rückwärtigen Lenkbereichs 44 (siehe Figur 6) sind mit den entsprechenden linken und rechten Antriebswellen 46 und 48 der Antriebseinheit 42 über Zahnradanordnungen verbunden, die sich zwischen jedem Paar von linken und rechten Wellen 46 - 50 und 48 - 52 erstrecken. Ein Umkehrzahnrad 54 ist zwischen den rechten Lenk- und Antriebswellen 52 und 48 vorgesehen, so daß die rechte und linke Antriebswelle 46 und 48 durch die Eingabe ihrer jeweiligen Lenkwellen 50 und 52 in entgegengesetzte Richtungen angetrieben werden.

Jede der Antriebs- und Lenkeinheiten 42 und 44 weist eine separate Hydraulikpumpenantriebskombination zum Antrieb seiner Differentiale 56 und 58 und ihrer entsprechenden Antriebswellen 46 - 48 und 50 - 52 auf. Wie es in Figur 6 gezeigt wird, werden zwei hydrostatische Pumpen 60 und 62 jeweils über eine entsprechende Eingangswelle 64 und 66 angetrieben. Die Eingangswellen 64 und 66 werden jeweils durch Riemenscheiben 68 und 70, welche durch einen Keilriemen 72 in Rotation versetzt werden, angetrieben. Ein zweiter Keilriemen 74, der durch die Antriebswelle des Antriebs 20 angetrieben wird, wird verwendet, um die erste Riemenscheibe 68 anzutreiben. Wie es am besten in den Figuren 2 und 3 dargestellt ist, weist jede Hydraulikpumpe 60 und 62 ihre eigene Taumelscheibensteuerwelle 76 und 78. Wie es in Figur 6 gezeigt wird, ist die Taumelscheibe für die Hydraulikpumpe 60 im Antriebsbereich 42 mit 80 bezeichnet, während die Taumelscheibe für die Hydraulikpumpe 62 im Lenkbereich 44 mit 82 bezeichnet ist.

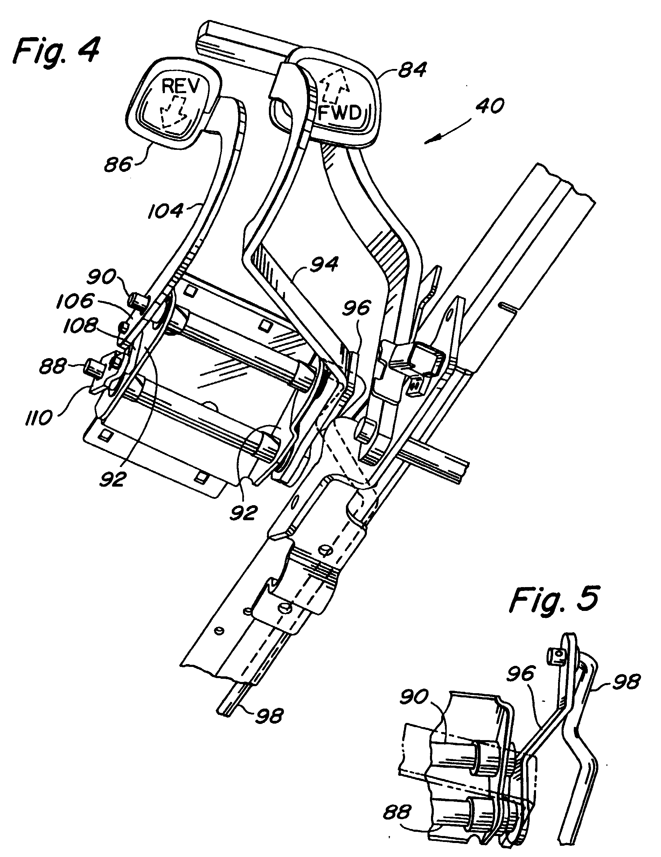

Es sollen nun ebenfalls die Figuren 4 und 5 betrachtet werden, in denen die Pedalanordnung 40 zur Steuerung der Vorwärts- und Rückwärtsgeschwindigkeit der Antriebseinheit 42 der Getriebeeinheit 18 dargestellt ist. Diese Anordnung weist ein Vorwärtspedal 84, wie auch ein Rückwärtspedal 86 auf, auf die in den Ansprüchen allgemein als Pedale Bezug genommen wird. Das Vorwärtspedal 84 und das Rückwärtspedal 86 werden von entsprechenden ersten und zweiten Schwenkwelle 88 und 90 aufgenommen, welche auf einem Satz von Haltern 92 an dem Rahmen 12 (siehe im besonderen Fig. 4) angeordnet sind. Ein einzelnes Pedal, wie eine Tretkurbelpedalanordnung, die auf einer einzelnen Welle mit einer einzigen Zug-Druck-Verbindungsstange angebracht ist, die mit der Getriebeeinheit 18 verbunden ist, kann ebenso verwendet werden, wenn dies gewünscht ist. Das Vorwärtspedal 84 ist an einem Vorwärtspedalhebel 94 angebracht, welcher steif mit der ersten oder primären Schwenkwelle 88 zum Ausführen einer Schwenkbewegung verbunden ist. Darüber hinaus ist mit der ersten Schwenkwelle 88 ein Steuerhebel 96 (siehe Figur 5) verbunden, der sich schwenkbar um die Achse der ersten Schwenkwelle 88 bewegt, wenn das Vorwärtspedal 84 niedergedrückt wird. Der Steuerhebel 96 wiederum ist mit einem Gestänge oder Antriebsstange 98, welche sich zwischen dem Steuerhebel 96 und dem Taumelscheibenhebel 100 der Antriebseinheit 42 der Getriebeeinheit 18 erstreckt, verbunden. Die Antriebsstange 98 ist mit dem Taumelscheibenhebel 100 über ein Universal- oder Kugelgelenk 102 verbunden, um die lineare Bewegung der Antriebsstange 98 und die Schwenkbewegung des Taumelscheibenhebels 100 aneinander anzupassen.

Die Pedalanordnung 40 weist weiter ein Rückwärtspedal 86 auf, welches schwenkbar an einer sekundären oder zweiten Schwenkwelle 90 angebracht ist. Das Umkehrpedal 86 wird durch einen Hebel 104 unterstützt, welcher eine Erweiterung 106 der zweiten Welle 90 nach rückwärts beinhaltet. Die Erweiterung 106 ist schwenkbar mit einem Reversierhebel verbunden, der aus einem ersten Verbindungsglied 108 und einem zweiten Verbindungsglied 110 besteht. Das erste Verbindungsglied 108 ist schwenkbar mit der Erweiterung 106 verbunden, während das zweite Verbindungsglied 110 steif mit der ersten Schwenkwelle 88 verbunden ist. Wenn das Umkehrpedal 86 niedergedrückt ist, schwenkt es um die zweite Schwenkwelle 90, wobei sein rückwärtiger Bereich oder die Erweiterung 106 in einem Bogen nach oben schwenkt. Entsprechend dienen die Reversierhebel bzw. Verbindungsglieder 108 und 110 dazu, die erste Schwenkwelle 88 in einer gegen den Uhrzeigersinn gerichteten Richtung zu drehen, wie es aus Fig. 4 ersehen werden kann, wenn das Rückwärtspedal 86 niedergedrückt ist. Wenn die erste Schwenkwelle 88 in einer gegen den Uhrzeigersinn gerichteten Richtung gedreht wird, wird der Steuerhebel 96, welcher steif mit ihr verbunden ist, nach rückwärts drehen, um die Antriebsstange 98 nach rückwärts zu verschieben und den Taumelscheibenhebel 100 in eine rückwärtige Richtung zu verschwenken, dadurch die Hydraulikpumpe 112 in einem Umkehrmodus betreibend.

Es wird nun wieder zu den Figuren 2 und 3 zurückgekehrt, in denen die Lenkung 38 zur Steuerung der Lenkeinheit 44 der Getriebeeinheit 18 mit zwei Differentialen, gezeigt wird. Die Lenkung 38 weist ein Lenkrad 30 auf, das zum Drehen mit einer Lenkspindel 114 verbunden ist. Während ein übliches Lenkrad vorgezogen wird, kann eine längliche Stange, Griff oder eine ähnliche Struktur, die daran angepaßt ist zu drehen oder um eine Achse gedreht zu werden, verwendet werden. Die Lenkspindel 114 wird durch obere und untere Lager 116 unterstützt, welche wiederum durch den Rahmen 12 aufgenommen werden. An dem unteren Ende der Lenkspindel 114 ist ein Ritzel 118 vorgesehen, welches auf seinem Umfang Zähne 120 aufweist. Die Zähne 120 sind daran angepaßt, mit Zähnen 122, die von seinem Sektorzahnrad 124 getragen werden, zu kämmen. Das Sektorzahnrad 124 wiederum ist auf einer Sektorwelle 126 fest angebracht, welche durch einen Halter 128 gestützt wird, der auf dem Rahmen 12 vorgesehen ist. Die Sektorwelle 126 ist daran angepaßt, eine Schwenkbewegung um eine im allgemeinen vertikale Achse auszuführen, um zu der drehenden Bewegung des Sektorzahnrads 124 zu passen. Wird nun Figur 3 betrachtet, so kann gesehen werden, daß das untere Ende der Sektorwelle 126 fest mit einem Lenkarm 130 verbunden ist. Der Lenkarm 130 schwenkt in einem Bogen, wenn die Sektorwelle 126 durch das Sektorzahnrad 124 gedreht wird. Der Lenkarm 130 ist an einem Kugelgelenk 132 universellen Typs gesichert, welches eine Steuerverbindung oder -stange 134 aufnimmt, welche sich nach rückwärts erstreckt, und wird durch ein Universal- oder Kugelgelenk 136 gleichen Typs an dem oberen Ende eines Taumelscheibensteuerhebels 138 aufgenommen. Der Taumelscheibensteuerhebel 138 wiederum ist fest mit der Taumelscheibensteuerwelle 78 verbunden, so daß eine Bewegung der Lenkstange 134 in Längsrichtung den Taumelscheibensteuerhebel 138 verschwenken und die Taumelscheibe 82 der Lenkpumpe 62 einstellen wird. Entsprechend wird, wenn das Lenkrad 134 gedreht wird, das Sektorzahnrad 124 gedreht werden und der Lenkarm 130 wird entweder in Vorwärts- oder Rückwärtsrichtung verschwenkt, um die Lenkstange 134 zu ziehen oder zu drücken und um die Taumelscheibe 82 der Lenkpumpe 62 einzustellen.

Es werden nun die Figuren 2 und 6 betrachtet, in denen der allgemeine Betrieb der Getriebeeinheit 18 vom Typ mit zwei Differentialen und vom Antriebs- und Lenktyp gezeigt ist. Das Getriebe 18 weist zwei separate hydrostatische Differentialgetriebe, eine Antriebseinheit 42 zum Antrieb der angetriebenen Räder 16 und eine Lenkeinheit 44 zur Lenkung dieser Räder 16 auf. Die separaten Gehäuse für die Antriebseinheit 42 und die Lenkeinheit 44 werden durch die unterbrochenen Linien angedeutet, die jedes von ihnen umschließen. Die hydrostatischen Pumpen 80 und 82 beider Getriebe 42 - 44 werden durch den Keilriemen 72 angetrieben, welcher wiederum durch den Keilriemen 74 angetrieben wird, der mit dem Antrieb 20 verbunden ist. Wie es in Figur 6 dargestellt wird, wird jede Pumpe 80 - 82 durch eine entsprechende Eingangswelle 64 - 66 angetrieben, die mit einem entsprechenden Keilriemen 68 - 70 verbunden ist, der durch den Keilriemen 74 angetrieben wird. Die Hydraulikpumpe 80 des Antriebsbereichs 42 treibt einen Hydraulikantrieb 112 an, welcher auf einer Ausgangswelle 140 und dem zugehörigen Zahnrad 142 rotiert. Das Zahnrad 142 wiederum überträgt über die Welle 144 und das Zahnrad 146 Rotationsenergie zu den linken und rechten Antriebswellen 46 und 48 in der gleichen Richtung. Die linken und die rechten Antriebswellen 46 - 48 sind mit Zahnrädern 150 - 152 zwischen dem Differential 56 und den Rädern versehen, welche auf den äußeren Endbereichen der Antriebswellen 46 - 48 angebracht sind. Die einstellbare Taumelscheibe 80 in der variablen, umkehrbaren Pumpe 60 erlaubt es, daß die Richtung der Antriebswellen 46 - 48 und der entsprechenden Räder 16 wie auch ihre Geschwindigkeit eingestellt werden kann.

Die Eingangswelle 66 der Lenkeinheit 44 ist mit einer hydrostatischen Pumpe 62 verbunden, welche einen Lenkantrieb 154 antreibt. Die Ausgangswelle 156 des Lenkantriebs 154 ist mit dem Lenkdifferential 58 verbunden, um die linke und rechte Lenkwelle 50 - 52 in der gleichen Richtung anzutreiben. Die linke Lenkwelle 50 des Differentials 58 ist mit einem großen Zahnrad 158 versehen, während die rechte Lenkwelle 52 in der bevorzugten Ausführungsform mit einem kleineren Zahnrad 160 versehen ist. Das kleinere Zahnrad 160 ist angebracht, um mit dem Reversierzahnrad 54 zu kämmen, das auf einer separaten Welle vorgesehen ist, die durch den Rahmen 12 getragen wird. Die Zahnräder 158 - 150 auf den linken Wellen 50 - 46 der Differentiale 58 - 56 kämmen miteinander, um einen direkten Antrieb zwischen den zwei Wellen 50 - 46 zur Verfügung zu stellen. Das Reversierzahnrad 54 auf der rechten Seite des Fahrzeugs 10 und das Zahnrad 152 auf der rechten Antriebswelle 48 des Differentials 56 kämmen ebenfalls, um die beiden Wellen 48 - 52 miteinander zu verbinden. Auf diese Weise wird Energie, die in dem Lenkdifferential 58 eingebracht wird, die Wellen der linken und rechten Lenkwelle 50 - 52 des Differentials 58 in dieselbe Richtung drehen. Eine Rotationsbewegung, die von der Lenkwelle 50 des Differentials 58 über das Zahnrad 158 und zu dem Zahnrad 150, das mit der linken Antriebswelle 46 des Differentials 56 übertragen wird, dient dazu, die linke Antriebswelle 46 des Differentials 56 in die entgegengesetzte Richtung wie die linke Lenkwelle 50 des Differentials 58 zu drehen. Die rechte Welle 52 des Differentials 58, welche mit dem Umkehrzahnrad 54 verbunden ist, dient dazu, die rechte Antriebswelle 48 des Differentials 56 in die gleiche Richtung zu drehen. Daher wird die Rotationsbewegung, die durch die Lenkeinheit 58 in die linke angetriebene Antriebswelle 46 wie auch in die rechte angetriebene Antriebswelle 48 eingebracht wird, die gleiche sein, obwohl in entgegengesetzten Richtungen. Entsprechend wird die linke Antriebswelle 46 in eine Richtung beschleunigt, während die rechte Antriebswelle 48 in die entgegengesetzte Richtung beschleunigt wird, wenn das Differential 58 durch die Pumpe 154 angetrieben wird.

Im Betrieb wird das Fahrzeug 10 wie folgt funktionieren. Die Bedienungsperson würde das Lenkrad 30 und Pedalanordnung 40 in üblicher Weise verwenden. Die Antriebsausgangswelle treibt den Keilriemen 74 an, um die Riemenscheiben 68 und 70 und die Eingangswellen 64 - 66 der Antriebs- und Lenkeinheiten 42 -44 zu drehen, siehe Figur 6. Um vorwärts zu fahren, drückt die Bedienungsperson das Vorwärtspedal 84, was die vordere Antriebsstange 98 und ihren Steuerhebel 96 dreht. Wenn der Steuerhebel 96 nach vorne bewegt wird, wird es die Antriebsstange 98 nach vorne drücken und den Taumelscheibensteuerhebel 100 nach vorne schwenken. Entsprechend wird die hydrostatische Pumpe 80 den Antrieb 112 antreiben, um das Differential 56, die linken und rechten Antriebswellen 46 - 48 und die an ihnen angebrachten Räder 16 in einer im wesentlichen gleichen Vorwärtsgeschwindigkeit anzutreiben. Sollte die Bedienungsperson wünschen, das Fahrzeug 10 in einer rückwärtigen Richtung anzutreiben, würde sie das Rückwärtspedal 85 herunterdrücken und über das am besten in Figur 4 gezeigte Gestänge, die Antriebsstange 98 in eine rückwärtige Richtung bewegen, um den Taumelscheibensteuerhebel 100 und die Taumelscheibensteuerwelle 76 in eine rückwärtige Richtung zu drehen, wobei die hydrostatische Pumpe 112 in einer Rückwärtsbetriebsart angetrieben wird, um das Antriebsdifferential 56 und ihre zugeordneten Antriebswellen 46 - 48 und Räder 16 rückwärts und mit einer im allgemeinen gleichen Geschwindigkeit anzutreiben.

Um das Fahrzeug 10 zu lenken, dreht die Bedienungsperson das Lenkrad 30, was die Lenkspindel 114 dreht. Die Zähne 120 des Ritzels 120 greifen in das Sektorzahnrad 124 ein, um die Welle 126 zu drehen. Der Lenkhebel 130, der mit dem Sektorzahnrad 126 verbunden ist, wird verschwenkt, um die Lenkstange 134 entweder zu ziehen oder zu drücken und um die Taumelscheibe 82 vorwärts oder rückwärts zu bewegen. Wenn die Taumelscheibe 82 bewegt wird, wird Hydraulikflüssigkeit zu dem Lenkantrieb 154 abgeteilt, um das Lenkdifferential 58 anzutreiben und die linken und rechten Lenkwellen 50 und 52 anzutreiben. Das Zahnrad 158 auf der linken Seite der Lenkwelle 50 treibt das Zahnrad 150 der linken Antriebswelle 46, um es in eine Richtung anzutreiben, während das Reversierzahnrad 54 zwischen der echten Welle 52 der Lenkeinheit 44 und der rechten Antriebswelle 48 der Antriebseinheit 42 die rechte Antriebswelle 48 der Antriebswelle in eine rückwärtige und gleiche Richtung antreibt.

Mit dieser derzeitigen Anordnung werden gewohnte Lenk- und Pedalanordnungen zur Betätigung des Antrieb- und Lenkgetriebes mit zwei Differentialen zur Verfügung gestellt. Die Freilaufräder 14, die an dem vorderen Ende des Fahrzeugs 10 vorgesehen sind, erlauben es, einfach in eine oder die andere Richtung zu schwenken, wie die angetriebenen Räder 16 mit ansteigend unterschiedlichen Geschwindigkeiten angetrieben werden, um Wendungen des Fahrzeugs 10 auszuführen.

Alternativ könnte ein Planetengetriebe anstelle des Getriebes mit zwei Differentialen verwendet werden. Mit einem solchen Getriebe können separate elektrische, hydraulische oder andere Leistungseingaben zur Verfügung gestellt werden, um die Radwellen anzutreiben und um Lenkeingaben an einen der Planetenradsätze beispielsweise den Ringsatz zur Verfügung zu stellen. Entsprechend würden das Lenkrad und die zu ihm gehörenden Gestänge mit dem Lenkeingang verbunden sein, während die Pedale und ihre entsprechenden Gestänge mit dem Antriebseingang verbunden wären.

## Patentansprüche

1. Fahrzeug (10) mit einem Antrieb (20) und zumindest einem rechten und einem linken Antriebsrad (16), wenigstens einem Lenkrad (30) und einem Getriebe (18), mit zumindest einer Antriebseinheit (42) und einer Lenkeinheit (44), die jeweils sowohl mit einer linken als auch einer rechten Antriebswelle (46, 48) derart wirksam verbindbar sind, daß die Antriebswellen (46, 48) zur Lenkung des Fahrzeugs mit unterschiedlichen Geschwindigkeiten rotieren können, und mit zumindest einem Pedal (84, 86) zur Betätigung der Antriebseinheit (42).

2. Fahrzeug nach Anspruch 1, dadurch gekennzeichnet, daß das Pedal derart wirksam mit der Antriebseinheit (42) verbindbar ist, das diese zumindest in eine Stellung zum Antrieb der Antriebsräder (16) in Vorwärts- bzw. Rückwärtsrichtung bzw. in Neutralstellung bringbar ist.

3. Fahrzeug nach einem oder mehreren der vorherigen Ansprüche, dadurch gekennzeichnet, daß das Lenkrad (30) über eine Lenkspindel (114) und vorzugsweise über ein Ritzel (118) auf ein an dem Fahrzeug (10) schwenkbar angebrachtes Sektorzahnrad (124) wirkt.

4. Fahrzeug nach Anspruch 3, dadurch gekennzeichnet, daß die Antriebseinheit (42) bzw. die Lenkeinheit (44) über zumindest eine Übertragungseinrichtung mit dem Sektorzahnrad (118) in Verbindung steht.

5. Fahrzeug nach einem oder mehreren der vorherigen Ansprüche, dadurch gekennzeichnet, daß die Antriebseinheit (42) und/oder die Lenkeinheit (44) wenigstens einen hydrostatischen Antrieb aufweist.

6. Fahrzeug nach einem oder mehreren der vorherigen Ansprüche, dadurch gekennzeichnet, daß die Lenkeinheit (44) und/oder die Antriebseinheit (42) über zumindest ein Getriebe mit den Antriebswellen (46, 48) verbindbar sind.

7. Fahrzeug nach einem oder mehreren der vorherigen Ansprüche, dadurch gekennzeichnet, daß die Lenkeinheit (44) und/oder die Antriebseinheit (42) ein Differential (56, 58) aufweist.

8. Fahrzeug nach einem oder mehreren der vorherigen Ansprüche, dadurch gekennzeichnet, daß das Pedal (84, 86) um eine Schwenkachse (88, 90) schwenkbar an dem Fahrzeug (10) vorgesehen ist.

9. Fahrzeug nach einem oder mehreren der vorherigen Ansprüche zur Verwendung in der Rasen-, Garten- bzw. Grundstückspflege.
